# EUROPÄISCHE PATENTANMELDUNG

(11) **EP 4 841 370 A1**
(43) Veröffentlichungstag der Anmeldung: **18.11.2026**
(21) Anmeldenummer: 25176675.4
(22) Anmeldetag: 15.05.2025
(51) Int. Cl.: G05B 13/02, D21F 9/00, D21F 11/00, D21G 9/00

(54) **WECHSEL ZWISCHEN PAPIERSORTEN IN EINEM PRODUKTIONSPROZESS ZUR HERSTELLUNG VON PAPIER**

(71) Anmelder: Voith Patent GmbH, 89522 Heidenheim (DE)
(72) Erfinder: HELD, Heiko, 89522 Heidenheim (DE); Bueno, Lucas, 89558 Böhmenkirch (DE); Greil, Thomas, 89537 Giengen (DE); Grohmann, Ulf, 89568 Hermaringen (DE)
(74) Vertreter: Voith Patent GmbH - Patentabteilung

(57) **Zusammenfassung**

Bei einem Verfahren zum Planen eines Wechsels von einer mithilfe einer Anlage in einem ersten Prozessabschnitt eines Produktionsprozesses auf Basis eines ersten Steuergrößenprofils hergestellten ersten Papiersorte zu einer danach in einem zweiten Prozessabschnitt auf Basis eines zweiten Steuergrößenprofils hergestellten zweiten Papiersorte in dem Produktionsprozess, wobei das erste Steuergrößenprofil einen Wert eines ersten Parameters und wenigstens eines weiteren Parameters und das zweite Steuergrößenprofil einen anderen Wert des ersten und des weiteren Parameters aufweist und ein Übergang von dem ersten zu dem zweiten Steuergrößenprofil einen ersten Übergang von dem einen Wert zu dem anderen Wert des ersten Parameters und einen weiteren Übergang von dem einen Wert zu dem anderen Wert des weiteren Parameters umfasst, wird der Übergang von dem ersten Steuergrößenprofil zu dem zweiten Steuergrößenprofil automatisiert auf Basis einer Herstellung der ersten Papiersorte geplant (S20). Die Erfindung betrifft außerdem ein Verfahren zur Durchführung des Produktionsprozesses und ein System bzw. Computerprogramm(produkt).

## Beschreibung

Die vorliegende Erfindung betrifft ein Verfahren zum Planen eines Wechsels von einer mithilfe einer Anlage hergestellten ersten Papiersorte zu einer danach hergestellten zweiten Papiersorte in einem Produktionsprozess zur Herstellung von Papier, ein Verfahren zur Durchführung eines Produktionsprozesses zur Herstellung der verschiedenen Papiersorten sowie ein System bzw. Computerprogramm bzw. Computerprogrammprodukt zur Durchführung eines hier beschriebenen Verfahrens.

In einer Papierfabrik können auf den Anlagen nacheinander unterschiedliche Papiersorten hergestellt werden. Verschiedene Papiersorten im Sinne der vorliegenden Erfindung können sich insbesondere in ihrem Flächengewicht und/oder ihrer Oberflächenbeschaffenheit und/oder der Art und/oder Zusammensetzung und/oder Vorbehandlung der verwendeten Rohstoffe unterscheiden.

Auch wenn verschiedene Sorten mit derselben Anlage hergestellt werden können, unterscheiden sich doch der Herstellungsprozess in vielen Parametern. Dies reicht von der Zusammenstellung der Rohstoffe und der Aufbereitung der Fasern über die Einstellungen von Maschinenparametern wie Vakua und Drücken bis hin zur Veredelung mittels Kalander und/oder Strichauftrag, um nur einige Parameter zu nennen.

Ein solcher Sortenwechsel ist ein komplexer Vorgang, und es kann je nach Art des Sortenwechsels mehrere Minuten bis hin zu einer halben Stunde oder länger dauern, bis die neue Sorte in verkaufsfähiger Qualität produziert wird. Das während dieser Übergangszeit produzierte Papier ist in der Regel Ausschuss. Daher ist der Betreiber aus ökonomischen Gründen daran interessiert, die Wechselzeiten möglichst kurz zu halten.

Aufgabe der vorliegenden Erfindung ist, die Herstellung verschiedener Papiersorten durch eine Anlage bzw. den Wechsel zwischen diesen Papiersorten in einem Produktionsprozess zur Herstellung der Papiersorten zu verbessern.

Diese Aufgabe wird durch ein Verfahren mit den Merkmalen des Anspruchs 1 bzw. 10 gelöst. Ansprüche 11, 12 stellen ein System bzw. Computerprogramm bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung wird zum Planen eines Wechsels in einem Produktionsprozess
- von einer ersten Papiersorte, die mithilfe, vorzugsweise in und/oder von, einer Anlage in einem ersten Prozessabschnitt des Produktionsprozesses auf Basis eines ersten Steuergrößenprofils hergestellt wird bzw. worden ist;
- zu einer anderen, zweiten Papiersorte, die mithilfe bzw. in und/oder von dieser Anlage danach in einem anderen, zweiten Prozessabschnitt des Produktionsprozesses auf Basis eines anderen, zweiten Steuergrößenprofils hergestellt wird bzw. worden ist;
ein Übergang von dem ersten Steuergrößenprofil zu dem zweiten Steuergrößenprofil automatisiert auf Basis einer, vorzugsweise (bereits) wenigstens teilweise geplanten und/oder (bereits) wenigstens teilweise durchgeführten, Herstellung der ersten Papiersorte geplant. Unter "automatisiert" im Sinne der vorliegenden Erfindung wird vorliegend wenigstens teilweise automatisiert verstanden, in einer Weiterbildung kann ein automatisierter Schritt, Verfahrensabschnitt bzw. Prozess (jeweils) vollautomatisiert sein.

Die Anlage wird vorzugsweise zwischen dem Herstellen der ersten Papiersorte und dem Herstellen der zweiten Papiersorte nicht abgestellt bzw. während des Wechsels weiter betrieben, insbesondere mit Fasersuspension versorgt bzw. von Arbeitsmaterial durchlaufen, entsprechend handelt es sich vorzugsweise um einen ersten und zweiten Prozessabschnitt eines durchgehenden bzw. kontinuierlichen Produktionsprozesses.

Nach einer Ausführung der vorliegenden Erfindung weist das erste Steuergrößenprofil
- einen (ersten) ein- oder mehrdimensionalen Wert eines ersten Parameters; und
- (jeweils) einen (ersten) Wert eines oder mehrerer weiterer ein- oder mehrdimensionaler Parameter
   auf und das zweite Steuergrößenprofil
- einen anderen (zweiten) Wert des ersten Parameters; und
- (jeweils) einen anderen (zweiten) Wert des bzw. der weiteren Parameter(s) auf und der Übergang von dem ersten Steuergrößenprofil zu dem zweiten Steuergrößenprofil umfasst
- einen ersten Übergang von dem einem (ersten) Wert des ersten Parameters zu dem anderen (zweiten) Wert des ersten Parameters und
- (jeweils) einen weiteren Übergang von dem (jeweiligen) einen (ersten) Wert des bzw. der weiteren Parameter(s) zu dem (jeweiligen) anderen (zweiten) Wert des (jeweiligen) weiteren Parameters.

Mit anderen Worten umfasst der Übergang von dem ersten Steuergrößenprofil zu dem zweiten Steuergrößenprofil den Wechsel eines Parameterwertes für wenigstens zwei Parameter, wobei zusätzlich Parameterwerte für einen oder mehrerer andere Parameter der Steuergrößenprofile bei dem Wechsel gleich bleiben können.

Durch eine automatisierte Planung eines solchen Wechsels von Parameterwerten für zwei oder mehr Parameter auf Basis einer Herstellung der ersten Papiersorte kann der Wechsel besonders vorteilhaft, insbesondere einfach(er), schnell(er) und/oder zuverlässig(er) und/oder auch ohne vertiefte Erfahrung bzw. auch von wenig(er) qualifiziertem (Fach)Personal, geplant werden und/oder besonders vorteilhaft sein bzw. durchgeführt werden, insbesondere einfach(er), schnell(er) und/oder zuverlässig(er), und/oder eine Herstellung verbessern, diese insbesondere schnell(er) und/oder zuverlässig(er) machen und/oder bessere Produktionsergebnisse ergeben.

Der automatisierte Übergang kann dabei auf verschiedene Arten realisiert sein. So kann beispielsweise zu einem Triggerzeitpunkt durch ein optisches, akustisches oder ähnliches Signal dem Bedienpersonal angezeigt werden, dass nun ein Sortenwechsel ansteht. Alternativ oder zusätzlich kann vorgesehen sein, dass der Übergang vom ersten Steuergrößenprofil zum zweiten Steuergrößenprofil automatisch initiiert wird.

Es können auch Ausführungen vorteilhaft sein, bei denen der Übergang von dem einen Wert des ersten Parameters zu dem anderen Wert des ersten Parameters automatisch initiiert wird, während der weitere Übergang von dem einen Wert des weiteren Parameters zu dem anderen Wert des weiteren Parameters nur durch ein Signal angezeigt, aber nicht automatisch gestartet wird. Das kann beispielsweise aus Sicherheitsgründen notwendig oder wünschenswert sei. So kann beispielsweise im Zuge eines solchen Übergangs ein Aggregat der Anlage gestartet werden, welches im ersten Prozessschritt nicht verwendet wurde (z.B. ein Pulper, ein Refiner oder auch eine Vakuumpumpe). In dem Fall kann vorgesehen sein, dass vor dem automatischen Start der Aggregate eine durch einen aktiven Bedienereingriff bestätigt wird, dass die Aggregate gefahrlos gestartet werden können. Auch wenn in diesem Fall noch ein Bedienereingriff notwendig ist, so ist der benötigte Wissensstand der Bedienpersonals geringer.

Art und Umfang der durchzuführenden Änderungen bzw. die gewünschten Steuergrößenprofile können in allen Ausführungen im technischen System -z.B. in Form einer Parametertabelle - hinterlegt sein. Das Pflegen dieser Steuergrößenprofile erfolgt zentral durch einen entsprechend ausgebildeten Experten. Somit muss auch dieses Fachwissen zum Zeitpunkt des Sortenwechsels nicht lokal beim Bedienpersonal vorhanden sein.

In einer Ausführung wird eine Sortenwechselzeit, in einer Weiterbildung ein Sortenwechselzeitpunkt bzw. Trigger, automatisiert auf Basis einer in dem ersten Prozessabschnitt hergestellten Papiermenge der ersten Papiersorte, insbesondere einer in dem ersten Prozessabschnitt zur Zeit einer erfindungsgemäßen Planung bereits hergestellten Papiermenge und/oder einer in dem ersten Prozessabschnitt voraussichtlich hergestellten Papiermenge, und/oder auf Basis einer vorgegebenen Soll-Papiermenge der ersten Papiersorte geplant, vorzugsweise derart bzw. mit der Maßgabe, dass nach, vorzugsweise bei, Erreichen des bzw. der Sortenwechselzeit(punkts) die in dem ersten Prozessabschnitt hergestellte Papiermenge der ersten Papiersorte voraussichtlich bzw. prognostiziert der vorgegebenen Soll-Papiermenge der ersten Papiersorte entspricht.

Durch die Berücksichtigung
- der vorgegebenen Soll-Papiermenge, die vorzugsweise von einer Produktionsplanung bereitgestellt, vorzugsweise ermittelt, wird; und
- einer voraussichtlich hergestellten Papiermenge, die vorzugsweise auf Basis einer bisher bereits hergestellten Papiermenge prognostiziert wird, welche ihrerseits vorzugsweise von einer Anlagen- bzw. Maschinenüberwachung und/oder -steuerung bereitgestellt, vorzugsweise ermittelt, wird;
kann ein besonders vorteilhafter Wechsel geplant werden, insbesondere eine Überproduktion der ersten Papiersorte reduziert, vorzugsweise vermieden, und die gewünschte Produktion der zweiten Papiersorte möglichst früh begonnen und damit diese früh(zeitig)er zur Verfügung gestellt werden.

Der automatisierte Übergang von dem ersten Steuergrößenprofil zu dem zweiten Steuergrößenprofil kann in einer bevorzugten Ausführung auf Basis der Produktionsplanung der Anlage passieren. Dazu ist es vorteilhaft, wenn das (Computer-)System zum Planen des Sortenwechsels (=technisches System) Informationen mit dem - meist separat geführten- (Computer-)System zur Erstellung der Produktionsplanung (=kaufmännisches System) austauschen kann, oder zumindest Informationen davon empfangen kann.

Dadurch ist es möglich, dass der Zeitpunkt, an dem der Übergang vom ersten Steuergrößenprofil zum zweiten Steuergrößenprofil startet (="Trigger"), nicht durch einen Bedienereingriff bestimmt werden muss, sondern automatisch ermittelt wird. So kann als Trigger die Ist-Menge an bereits produziertem Papier der ersten Papiersorte im technischen System der Papiermaschine mit der geplanten zu produzierenden Soll-Menge der ersten Papiersorte im kaufmännischen System verglichen werden.

In einer Ausführung wird der Übergang von dem ersten Steuergrößenprofil zu dem zweiten Steuergrößenprofil automatisiert auf Basis wenigstens eines bereits durchgeführten früheren Wechsels von der mithilfe der Anlage hergestellten ersten Papiersorte und/oder zu der mithilfe der Anlage hergestellten zweiten Papiersorte geplant.

In einer Weiterbildung wird der Übergang
- auf Basis eines, vorzugsweise besonders guten und/oder schnellen Sortenwechsels ("Golden Change"); oder
- auf Basis eines Sortenwechsels, der zu einem besonders guten Endprodukt geführt hat ("Golden Run")
geplant, vorzugsweise durch Übernahme von Parameterwerten für das erste und/oder zweite Steuergrößenprofil.

Dabei kann insbesondere vorgesehen sein, dass beim Feststellen eines besonders guten Sortenwechsels oder eines Sortenwechsels, der zu einem besonders guten Endprodukt geführt hat, dies durch einen entsprechenden Bedienereingriff dem Computersystem mitgeteilt wird. Das für diesen Sortenwechsel verwendete Steuergrößenprofil wird dann erfasst und im technischen System als Basis für kommende Sortenwechsel hinterlegt.

Auf diese Weise ist auch eine kontinuierliche Prozessoptimierung der Anlage möglich. Wenn es die Situation ermöglicht, also wenn beispielsweise entsprechend ausgebildetes Bedienpersonal vorhanden ist und/oder die Produktionssituation einen entsprechenden Spielraum aufweist, kann der automatisierte Übergang vom ersten auf das zweite Steuergrößenprofil zeitweise ausgeschaltet werden, um neue Steuergrößenprofile auszuprobieren, und ihre Wirkung zu testen. Erweist sich der Test als erfolgreich, wird dieses neue Steuergrößenprofil für künftige Wechsel hinterlegt, und der automatisierte Übergang kann wieder eingeschaltet werden. Wenn der Test nicht erfolgreich ist, wird mit dem alten Steuergrößenprofil weitergearbeitet.

Durch dieses Vorgehen kann sehr einfach sichergestellt werden, dass Prozessoptimierungen beim Sortenwechsel sofort für die gesamte Produktion wirksam werden, und nicht erst im Rahmen von Schulungen oder ähnlichem zwischen den verschiedenen Schichten abgestimmt werden müssen.

Durch diese Berücksichtigung vergangener Wechsel, insbesondere empirischer Parameterwerte, kann der Wechsel besonders vorteilhaft, insbesondere einfach(er), schnell(er) und/oder zuverlässig(er) und/oder auch ohne vertiefte Erfahrung bzw. auch von wenig(er) qualifiziertem (Fach)Personal, geplant werden und/oder besonders vorteilhaft sein bzw. durchgeführt werden, insbesondere einfach(er), schnell(er) und/oder zuverlässig(er), und/oder eine Herstellung verbessern, diese insbesondere schnell(er) und/oder zuverlässig(er) machen und/oder bessere Produktionsergebnisse ergeben.

Während eines Sortenwechsels ergibt sich üblicherweise eine Übergangsphase, in der das produzierte Papier weder die Spezifikationen der ersten Papiersorte noch der zweiten Papiersorte erfüllt. Dieses Papier ist dann meist unverkäuflicher Ausschuss. Somit ist es aus ökonomischen Gründen wichtig für den Betreiber, diese Übergangsphase so kurz wie möglich zu halten.

In einer Ausführung wird daher vorgeschlagen
- für den ersten Übergang ein erster Startzeitpunkt geplant; und
- für den weiteren Übergang bzw. einen oder mehrere der weiteren Übergänge (jeweils) ein anderer, späterer Startzeitpunkt geplant.

In einer Weiterbildung liegt der erste Startzeitpunkt innerhalb des ersten Prozessabschnitts bzw. wird derart geplant.

Derartige Ausführungen können vorteilhaft sein, da der Übergang verschiedener Parameter von einem Wert auf einen anderen Wert unterschiedlich lange dauert. So wird beispielsweise die Steigerung der Saugleistung einer Vakuumpumpe schneller wirksam als die Beschleunigung der Maschinengeschwindigkeit der Anlage. In dem Fall fallen die höheren Kosten für das höhere Vakuum schon zu einem Zeitpunkt an, an dem sie wegen der noch relative niedrigen Maschinengeschwindigkeit noch gar nicht benötigt werden. In dem Fall kann vorgesehen sein, die Übergänge "Steigerung der Maschinengeschwindigkeit" und "Erhöhung Vakuum" zu unterschiedlichen Zeitpunkten zu starten.

Zusätzlich oder alternativ liegt in einer Ausführung der bzw. einer oder mehrere der spätere(n) Startzeitpunkt(e (auch) jeweils) innerhalb des ersten Prozessabschnitts bzw. wird derart geplant. Zusätzlich hierzu kann in einer Ausführung einer oder mehrere andere der spätere(n) Startzeitpunkt(e jeweils) außerhalb des ersten Prozessabschnitts liegen bzw. derart geplant werden. Alternativ kann in einer Ausführung (auch) der bzw. einer oder mehrere der spätere(n) Startzeitpunkt(e jeweils) außerhalb des ersten Prozessabschnitts liegen bzw. derart geplant werden.

Bei einigen oder allen Parametern kann der Übergang also schon vor dem Triggerzeitpunkt für den Sortenwechsel gestartet werden.

Zusätzlich oder alternativ wird in einer Ausführung ein variabler zeitlicher Abstand zwischen dem ersten und dem bzw. einem oder mehreren der anderen Startzeitpunkt(e jeweils) dynamisch, vorzugsweise während des ersten Prozessabschnitts, geplant.

Hierdurch können vorteilhaft insbesondere Totzeiten oder dergleichen berücksichtigt bzw. wenigstens teilweise kompensiert werden. So kann beispielsweise ermittelt werden, wie lange die Anlage mit dem Vorrat in einer Maschinenbütte noch die erste Papiersorte produzieren kann. Während dieses Zeitraums, zum Beispiel 10 Minuten vor dem Sortenwechselzeitpunkt bzw. Trigger, können die Prozesse im Vorfeld der Maschinenbütte, zum Beispiel Mahlung, Mischung und/oder Füllstoffdosierung oder dergleichen, bereits auf die neuen Sortenanforderungen umgestellt werden.

Weiterhin kann es vorkommen, dass für die zweite Papiersorte Aggregate benötigt werden, die für die erste Papiersorte gar nicht benötigt werden (z.B. Refiner, Pumpen etc.). Diese benötigen eine gewisse Zeit, bis sie voll einsatzfähig sind.

Daher ist es sinnvoll, derartige Aggregate schon vor dem Triggerzeitpunkt zu starten.

Dadurch kann der Wechsel besonders vorteilhaft, insbesondere einfach(er), schnell(er) und/oder zuverlässig(er) und/oder auch ohne vertiefte Erfahrung bzw. auch von wenig(er) qualifiziertem (Fach)Personal, geplant werden und/oder besonders vorteilhaft sein bzw. durchgeführt werden, insbesondere einfach(er), schnell(er) und/oder zuverlässig(er), und/oder eine Herstellung verbessern, diese insbesondere schnell(er) und/oder zuverlässig(er) machen und/oder bessere Produktionsergebnisse ergeben.

**In** einer Ausführung wird der Übergang von dem ersten Steuergrößenprofil zu dem zweiten Steuergrößenprofil automatisiert auf Basis einer bei einer Herstellung der ersten Papiersorte durchgeführten Steuerung und/oder Überwachung der Anlage geplant.

In einer Weiterbildung wird ein (bereits) geplanter Übergang von dem ersten Steuergrößenprofil zu dem zweiten Steuergrößenprofil automatisiert auf Basis einer bei einer Herstellung der ersten Papiersorte durchgeführten Steuerung und/oder Überwachung der Anlage verändert, vorzugsweise (dynamisch und/oder während des ersten Prozessabschnitts) angepasst.

Dadurch kann der Wechsel besonders vorteilhaft, insbesondere einfach(er), schnell(er) und/oder zuverlässig(er) und/oder auch ohne vertiefte Erfahrung bzw. auch von wenig(er) qualifiziertem (Fach)Personal, geplant werden und/oder besonders vorteilhaft sein bzw. durchgeführt werden, insbesondere einfach(er), schnell(er) und/oder zuverlässig(er), und/oder eine Herstellung verbessern, diese insbesondere schnell(er) und/oder zuverlässig(er) machen und/oder bessere Produktionsergebnisse ergeben.

Besonders vorteilhaft können zwei oder mehr der vorgenannten Merkmale kombiniert sein. So kann das Planen des Übergangs vorteilhaft dynamisch erfolgen, basierend auf einer, vorzugsweise wiederholten, Analyse vorhandener Produktionsdaten, wobei vorzugsweise nur die Ziele vorgegeben werden. Vorteilhafterweise können dadurch insbesondere schnellere Wechselzeiten realisiert werden. Zusätzlich oder alternativ benötigt dadurch Bedienpersonal keine Sachkunde zur Ermittlung des "Golden Runs" oder dergleichen mehr.

Vorzugsweise werden statt fest vorgegebener Intervalle für den Wechsel bzw. Übergang diese Intervalle auf Basis des aktuellen Anlagenstatus ermittelt. Wenn beispielsweise die zweite Papiersorte viel von einem Füllstoff benötigt, von dem die erste Papiersorte nur wenig benötigt, kann mit der Erhöhung der Nachführung dieses Füllstoffs später begonnen werden, falls der Lagertank für diese Füllstoff noch gut gefüllt ist. Ist der Tank jedoch fast leer, ist es vorteilhaft, mit diesem Prozess früher zu starten.

Eine, insbesondere direkte, Zusammenschaltung der Maschinen- bzw. Anlagensteuerung und/oder -überwachung mit einer Produktionsplanung, insbesondere einem Produktionsplanungsprogramm, kann eine automatisierte Planung des Wechsels besonders effizient, einfach und/oder prozesssicher machen.

In einer Ausführung wird zusätzlich automatisiert ein Wechsel von der mithilfe der Anlage in dem ersten Prozess auf Basis des ersten Steuergrößenprofils hergestellten ersten Papiersorte zu einer mithilfe der Anlage in einem Zwischen-Prozessabschnitt des Produktionsprozesses zwischen dem ersten und zweiten Prozessabschnitt auf Basis eines dritten Steuergrößenprofils hergestellten dritten Papiersorte geplant, wobei ein Übergang von dem ersten Steuergrößenprofil zu dem dritten Steuergrößenprofil automatisiert auf Basis einer Herstellung der ersten Papiersorte geplant wird, wobei (auch) bei dieser Planung vorzugsweise eines oder mehrere der Merkmale realisiert werden, die hier zur Planung des Wechsels von der ersten zu der zweiten Papiersorte bzw. des Übergangs von dem ersten Steuergrößenprofil zu dem zweiten Steuergrößenprofil erläutert sind.

In einer Ausführung umfasst der bzw. das Planen des Übergang(s) von dem ersten Steuergrößenprofil zu dem dritten Steuergrößenprofil einen bzw. ein Planen eines Übergang(s) von dem ersten Steuergrößenprofil zu dem dritten Steuergrößenprofil, der während des Übergangs von dem ersten Steuergrößenprofil zu dem zweiten Steuergrößenprofil erfolgt.

Hierdurch kann besonders vorteilhaft eine kleine(re) Variation der ersten Papiersorte (zu der dritten Papiersorte) durchgeführt werden, bei der kleine(re) und/oder schnell(er) wirkende Änderungen durchgeführt werden, besonders vorteilhaft zum Beispiel eine Erhöhung einer Presslast. Während dieser Sortenwechsel erste Papiersorte zu dritter Papiersorte noch läuft, können bereits die langfristigen Umstellungen für den darauffolgenden Sortenwechsel dritte Papiersorte zu zweiter Papiersorte bzw. den Gesamtwechsel erste Papiersorte → (dritte Papiersorte →) zweite Papiersorte durchgeführt werden, zum Beispiel Beginn der Auflösung von Altpapier und Bereitstellen in einer Stapelbütte oder dergleichen.

In einer Ausführung weist ein Parameter des ersten und zweiten Steuergrößenprofils (und in einer Weiterbildung des dritten Steuergrößenprofils) eine Steuergröße eines Anlagenabschnitts zum Bereitstellen von Fasersuspensionen, in einer Weiterbildung eine Steuergröße
- eines oder mehrerer Stapeltürme, in denen (jeweils), vorzugsweise einzelne, Faserkomponenten, beispielsweise (in einem oder mehrerer Stapeltürmen) Langfaserzellstoff und/oder (in einem oder mehrerer Stapeltürmen) Kurzfaserzellstoff und/oder (in einem oder mehrerer Stapeltürmen) Recylingfasern und/oder (in einem oder mehrerer Stapeltürmen) Produktionsausschuss, vorgehalten werden; und/oder
- einer oder mehrerer Mischbütten; und/oder
- einer oder mehrerer Maschinenbütten;
auf.

Zusätzlich oder alternativ weist in einer Ausführung ein Parameter des ersten und zweiten Steuergrößenprofils (und in einer Weiterbildung des dritten Steuergrößenprofils) eine Steuergröße eines Konstantteil auf.

Zusätzlich oder alternativ weist in einer Ausführung ein Parameter des ersten und zweiten Steuergrößenprofils (und in einer Weiterbildung des dritten Steuergrößenprofils) eine Steuergröße eines Stoffauflaufs auf.

Zusätzlich oder alternativ weist in einer Ausführung ein Parameter des ersten und zweiten Steuergrößenprofils (und in einer Weiterbildung des dritten Steuergrößenprofils) eine Steuergröße einer Siebpartie auf.

Zusätzlich oder alternativ weist in einer Ausführung ein Parameter des ersten und zweiten Steuergrößenprofils (und in einer Weiterbildung des dritten Steuergrößenprofils) eine Steuergröße einer Pressenpartie auf.

Zusätzlich oder alternativ weist in einer Ausführung ein Parameter des ersten und zweiten Steuergrößenprofils (und in einer Weiterbildung des dritten Steuergrößenprofils) eine Steuergröße einer Trockenpartie auf.

Zusätzlich oder alternativ weist in einer Ausführung ein Parameter des ersten und zweiten Steuergrößenprofils (und in einer Weiterbildung des dritten Steuergrößenprofils) eine Steuergröße eines Glättwerks auf.

Für diese Parameter bzw. Steuergrößen bzw. (die Planung von) deren Übergang ist die vorliegende Erfindung, insbesondere aufgrund ihrer Dynamik und/oder Wechselwirkung und/oder ihres Einflusses auf den Produktionsprozesses, besonders vorteilhaft, entsprechend kann dadurch der Wechsel besonders vorteilhaft, insbesondere einfach(er), schnell(er) und/oder zuverlässig(er) und/oder auch ohne vertiefte Erfahrung bzw. auch von wenig(er) qualifiziertem (Fach)Personal, geplant werden und/oder besonders vorteilhaft sein bzw. durchgeführt werden, insbesondere einfach(er), schnell(er) und/oder zuverlässig(er), und/oder eine Herstellung verbessern, diese insbesondere schnell(er) und/oder zuverlässig(er) machen und/oder bessere Produktionsergebnisse ergeben.

Nach einer Ausführung der vorliegenden Erfindung wird (bei einem Verfahren) zur Durchführung des Produktionsprozesses zur Herstellung von verschiedenen Papiersorten mithilfe der Anlage die erste Papiersorte mithilfe der Anlage in dem ersten Prozessabschnitt des Produktionsprozesses auf Basis des ersten Steuergrößenprofils hergestellt.

Davor oder besonders vorteilhaft wenigstens teilweise während dieser Herstellung der ersten Papiersorte oder davor und teilweise während dieser Herstellung der ersten Papiersorte wird ein Wechsel von der Herstellung der ersten Papiersorte zu der Herstellung der anderen zweiten Papiersorte nach einem hier beschriebenen Verfahren geplant.

Dieser geplante Wechsel wird durchgeführt und anschließend mithilfe der Anlage in dem zweiten Prozessabschnitt des Produktionsprozesses auf Basis des zweiten Steuergrößenprofils die zweite Papiersorte hergestellt.

In einer Ausführung wird zudem ein Wechsel von der Herstellung der ersten Papiersorte zu der Herstellung der dritten Papiersorte nach einem hier beschriebenen Verfahren geplant, dieser geplante Wechsel durchgeführt und mithilfe der Anlage in dem Zwischen-Prozessabschnitt des Produktionsprozesses auf Basis des dritten Steuergrößenprofils die dritte Papiersorte hergestellt, bevor in dem zweiten Prozessabschnitt des Produktionsprozesses auf Basis des zweiten Steuergrößenprofils die zweite Papiersorte hergestellt wird.

Nach einer Ausführung der vorliegenden Erfindung ist ein System zum Planen des Wechsels von der ersten Papiersorte zu der zweiten Papiersorte in dem Produktionsprozess, insbesondere hard- und/oder software-, insbesondere programmtechnisch, zur Durchführung eines hier beschriebenen Verfahrens eingerichtet und/oder weist Mittel zum automatisierten Planen des Übergangs von dem ersten Steuergrößenprofil zu dem zweiten Steuergrößenprofil auf Basis einer Herstellung der ersten Papiersorte auf.

In einer Ausführung weist das System bzw. seine Mittel auf:
Mittel zum automatisierten Planen einer Sortenwechselzeit auf Basis einer in dem ersten Prozessabschnitt hergestellten Papiermenge der ersten Papiersorte und/oder einer vorgegebenen Soll-Papiermenge der ersten Papiersorte; und/oder
Mittel zum automatisierten Planen des Übergangs von dem ersten Steuergrößenprofil zu dem zweiten Steuergrößenprofil auf Basis wenigstens eines bereits durchgeführten früheren Wechsels von der mithilfe der Anlage hergestellten ersten Papiersorte und/oder zu der mithilfe der Anlage hergestellten zweiten Papiersorte und/oder
Mittel zum automatisierten Planen eines ersten Startzeitpunkts für den ersten Übergang und eines anderen, späteren Startzeitpunkts für den weiteren Übergang, insbesondere zum dynamischen Planen eines variablen zeitlichen Abstands zwischen dem ersten und anderen Startzeitpunkt; und/oder
Mittel zum automatisierten Planen des Übergangs von dem ersten Steuergrößenprofil zu dem zweiten Steuergrößenprofil auf Basis einer bei einer Herstellung der ersten Papiersorte durchgeführten Steuerung und/oder Überwachung der Anlage, insbesondere zum automatisierten Verändern eines geplanten Übergangs von dem ersten Steuergrößenprofil zu dem zweiten Steuergrößenprofil auf Basis einer bei einer Herstellung der ersten Papiersorte durchgeführten Steuerung und/oder Überwachung der Anlage; und/oder
Mittel zum automatisierten Planen des Wechsels von der ersten Papiersorte zu der in dem Zwischen-Prozessabschnitt hergestellten dritten Papiersorte mit Mitteln zum automatisierten Planen des Übergangs von dem ersten Steuergrößenprofil zu dem dritten Steuergrößenprofil auf Basis einer Herstellung der ersten Papiersorte.

In einer Ausführung weist das System bzw. seine Mittel zur Durchführung des Produktionsprozesses zur Herstellung von verschiedenen Papiersorten mithilfe der Anlage auf, in einer Weiterbildung
Mittel zum Herstellen der ersten Papiersorte mithilfe der Anlage in dem ersten Prozessabschnitt des Produktionsprozesses auf Basis des ersten Steuergrößenprofils; und/oder
Mittel zum Durchführen des bzw. der geplanten Wechsel(s); und/oder
Mittel zum Herstellen der zweiten Papiersorte mithilfe der Anlage in dem zweiten Prozessabschnitt des Produktionsprozesses auf Basis des zweiten Steuergrößenprofils; und/oder
Mittel zum Herstellen der dritten Papiersorte mithilfe der Anlage in dem Zwischen-Prozessabschnitt des Produktionsprozesses auf Basis des dritten Steuergrößenprofils.

Ein System und/oder Mittel im Sinne der vorliegenden Erfindung kann hard- und/oder softwaretechnisch ausgebildet sein, insbesondere wenigstens eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule, insbesondere einen oder mehrere, vorzugsweise entsprechend programmierte, Computer, aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere den bzw. die Wechsel zwischen den Papiersorten planen und/oder diese(n) bzw. den Produktionsprozess(e) durchführen kann. Ein Computerprogrammprodukt kann in einer Ausführung ein, insbesondere computerlesbares und/oder nicht-flüchtiges, Speichermedium zum Speichern eines Programms bzw. von Anweisungen bzw. mit einem darauf gespeicherten Programm bzw. mit darauf gespeicherten Anweisungen aufweisen, insbesondere sein. In einer Ausführung veranlasst ein Ausführen eines Programms bzw. seiner Anweisungen durch ein System bzw. eine Steuerung, insbesondere einen Computer oder eine Anordnung von mehreren Computern, das System bzw. die Steuerung, insbesondere den bzw. die Computer, dazu, ein hier beschriebenes Verfahren bzw. einen oder mehrere seiner Schritte auszuführen, bzw. sind das Programm bzw. die Anweisungen hierzu eingerichtet.

In einer Ausführung sind ein oder mehrere, insbesondere alle, Schritte des Verfahrens vollständig oder teilweise computerimplementiert bzw. werden ein oder mehrere, insbesondere alle, Schritte des Verfahrens vollständig oder teilweise automatisiert durchgeführt, insbesondere durch das System bzw. sein(e) Mittel.

In einer Ausführung weist das System einen Teil oder die Anlage auf.

Weitere Vorteile, Merkmale und vorteilhafte Weiterbildungen der vorliegenden Erfindung ergeben sich aus den Unteransprüchen und den Ausführungsbeispielen. Hierzu zeigt, teilweise schematisiert:
Fig. 1: ein System zur Durchführung eines Produktionsprozesses zur Herstellung von verschiedenen Papiersorten und zum Planen eines Wechsels in dem Produktionsprozess von einer ersten Papiersorte zu einer zweiten Papiersorte nach einer Ausführung der vorliegenden Erfindung;
Fig. 2: den Produktionsprozess mit dem Wechsel; und
Fig. 3: ein Verfahren zum Planen des Wechsels und Durchführung des Produktionsprozesses nach einer Ausführung der vorliegenden Erfindung.

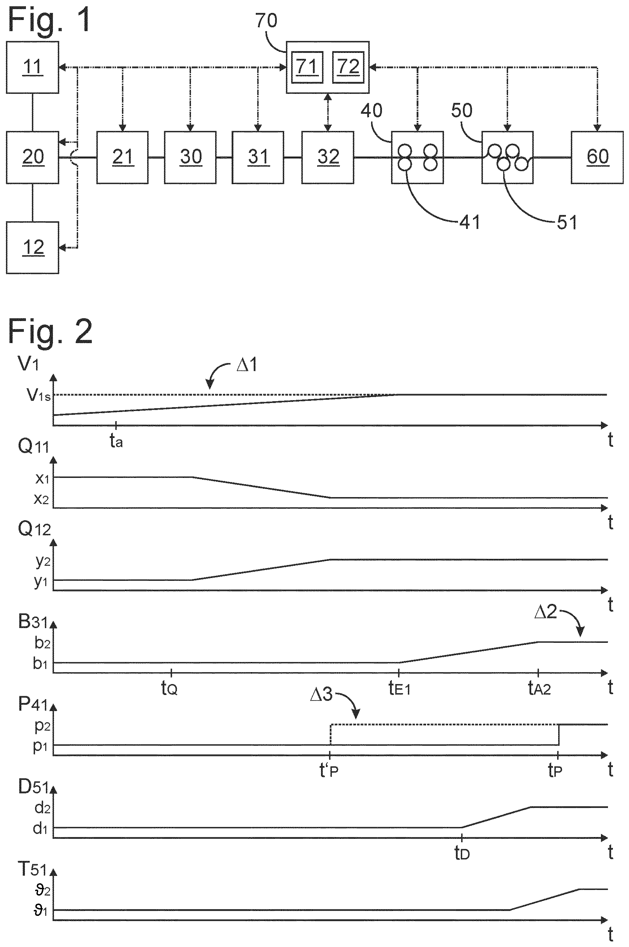

Fig. 1 zeigt eine Anlage zur Herstellung von verschiedenen Papiersorten mit (zur besseren Übersichtlichkeit exemplarisch nur) zwei Stapeltürmen 11, 12, einer Mischbütte 20, einer Maschinenbütte 21, einem Konstantteil 30, einem Stoffauflauf 31, einer Siebpartie 32, einer Pressenpartie 40 mit (zur besseren Übersichtlichkeit exemplarisch nur) zwei Pressnips 41, einer Trockenpartie 50 mit (zur besseren Übersichtlichkeit exemplarisch nur) zwei Trockenzylinderpaaren 51, einem Glättwerk 60 und einem Computersystem 70 mit bzw. zur Produktionsplanung 71 und Maschinen- bzw. Anlagensteuerung und -überwachung 72.

Fig. 2 zeigt (jeweils) über der Zeit t
- im obersten Diagramm die produzierte Menge V₁ einer ersten Papiersorte, wobei V₁ₛ eine vorgegebene Soll-Papiermenge illustriert;
- in dem darunterliegenden Diagramm eine Stoffmenge Q₁₁ einer ersten Faserkomponente aus dem Stapelturm 11;
- in dem darunterliegenden Diagramm eine Stoffmenge Q₁₂ einer zweiten Faserkomponente aus dem Stapelturm 12;
- in dem darunterliegenden bzw. mittleren Diagramm die Art B₃₁ der im Stoffauflauf 31 vorliegenden Faserstoffsuspension;
- in dem darunterliegenden Diagramm eine Linienlast P₄₁ wenigstens eines Pressnips 41 in der Pressenpartie 40;
- in dem darunterliegenden Diagramm einen Heizdampfstrom D₅₁ wenigstens eines Trockenzylinderpaars 51 in der Trockenpartie 50; und
- in dem darunterliegenden bzw. untersten Diagramm die Temperatur T₅₁ des wenigstens einen Trockenzylinderpaars 51.

Illustrativ in einem aktuellen Planungszeitpunkt tₐ wird ein Wechsel von der ersten zu einer zweiten Papiersorte geplant.

Hierzu wird auf Basis der vorgegebenen Soll-Papiermenge V₁ₛ aus der Produktionsplanung 71 und einer voraussichtlich zu einem Zeitpunkt t_{E1} hergestellten Papiermenge V₁(t_{E1}), welche auf Basis der bereits hergestellten Papiermenge V₁(tₚ) der ersten Papiersorte prognostiziert wird, welche wiederum mithilfe der Maschinen- bzw. Anlagensteuerung und -überwachung 72 ermittelt wird, ein Sortenwechselzeitpunkt t_{E1} automatisiert geplant.

Basierend hierauf und entsprechender Totzeiten wird automatisiert ein erster Übergang von einem Wert eines ersten Parameters zu einem anderen Wert dieses ersten Parameters geplant, was exemplarisch an der Bereitstellung der gewünschten Faserstoffsuspension illustriert ist: insbesondere wird ein erster Startzeitpunkt t_{Q} geplant, ab dem eine Reduzierung der Stoffmenge Q₁₁ der ersten Faserkomponente aus dem Stapelturm 11 von einem Wert x₁ auf einen anderen Wert x₂ und eine Erhöhung der Stoffmenge Q₁₂ der zweiten Faserkomponente aus dem Stapelturm 12 von einem Wert y₁ auf einen anderen Wert y₂ kommandiert wird. Man erkennt an dem mittleren Diagramm und den beiden darüberliegenden Diagrammen der Fig. 2, dass mit entsprechenden Totzeiten zunächst die entsprechenden Stoffmengen ab- bzw. zunehmen und danach die Art B₃₁ der im Stoffauflauf 31 vorliegenden Faserstoffsuspension schließlich von der Faserstoffsuspension(sart) b₁ für die erste Papiersorte zu der gewünschten Faserstoffsuspension(sart) b₂ für die zweite Papiersorte übergeht. Aufgrund der bei der Planung berücksichtigten Totzeiten und dem ersten Startzeitpunkt t_{Q} für den ersten Übergang, der zeitlich vor dem Sortenwechselzeitpunkt t_{E1} noch innerhalb eines ersten Prozessabschnitts Δ1 liegt, in dem die erste Papiersorte hergestellt wird, wird die Soll-Papiermenge V₁ₛ der ersten Papiersorte aus der im Stoffauflauf 31 vorliegenden Faserstoffsuspension(sart) b₁ produziert. Nachdem im Stoffauflauf 31 dann die Faserstoffsuspension(sart) b₂ für die zweite Papiersorte vorliegt (Fig. 2: t_{A2}), wird in einem zweiten Prozessabschnitt Δ2 des Produktionsprozesses die zweite Papiersorte hergestellt.

Außer dem vorstehend erläuterten ersten Übergang von Steuergrößenparameterwerten für die Bereitstellung von Fasersuspensionen werden nachfolgend, wiederum exemplarisch, zwei weitere Übergänge von Steuergrößenparameterwerten erläutert:
In dem untersten Diagramm der Fig. 2 ist exemplarisch eine gewünschte bzw. erforderliche Veränderung einer Temperatur T₅₁ wenigstens eines Trockenzylinderpaars 51 der Trockenpartie 50 von einem Wert ϑ₁ für die erste Papiersorte zu einem Wert ϑ₂ für die zweite Papiersorte illustriert. Aufgrund der entsprechenden Totzeiten wird ein - gegenüber dem ersten Startzeitpunkt t_{Q} anderer, späterer - Startzeitpunkt t_{D} geplant, ab dem eine Erhöhung des Heizdampfstroms D₅₁ wenigstens eines Trockenzylinderpaars 51 in der Trockenpartie 50 kommandiert wird.

Aufgrund dieses anderen Startzeitpunkts t_{D} für diesen weiteren Übergang liegt in dem zweiten Prozessabschnitt des Produktionsprozesses, in dem die zweite Papiersorte hergestellt mit, die gewünschte bzw. erforderliche Temperatur ϑ₂ vor, wenn die entsprechende Fasersuspension die Trockenpartie 50 erreicht.

In analoger Weise wird ein anderer weiterer Übergang für die Linienlast in der Pressenpartie 40 geplant. Hierzu illustriert das drittunterste Diagramm der Fig. 2 eine entsprechende Erhöhung des Wertes des Steuergrößenparameters P₄₁ von p₁ für die erste Papiersorte auf p₂ für die zweite Papiersorte, was sehr schnell erfolgen kann und im Zeitpunkt t_{P} kommandiert wird.

Wiederum nur zu Illustrationszwecken vereinfacht ist in Fig. 2 gestrichelt eine Abwandlung angedeutet, in der zwischen erster und zweiter Papiersorte in einem Zwischen-Prozessabschnitt Δ3 noch eine dritte Papiersorte hergestellt werden soll, die gegenüber der ersten Papiersorte nur geringfügig(er) variiert, indem exemplarisch die Linienlast in der Pressenpartie 40 im Zeitpunkt t'_{P} kommandiert bzw. erhöht wird (zur vereinfachten Illustration ist dabei angenommen, dass die Soll-Papiermenge V₁ₛ entsprechend reduziert ist, so dass am Ende der Faserstoffsuspension(sart) b₁ statt der ersten die dritte Papiersorte produziert wird. Dies illustriert insbesondere eine Planung einer dritten Papiersorte in einem Zwischen-Prozessabschnitt, wobei parallel auch bereits der Wechsel von der ersten auf die zweite Papiersorte geplant und durchgeführt wird.

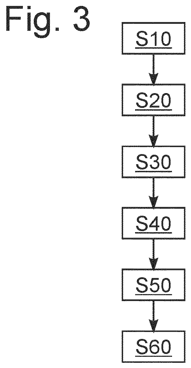

Fig. 3 illustriert Schritte eines erfindungsgemäßen Verfahrens:
In einem Schritt S10 wird die erste Papiersorte mithilfe der vorstehend erläuterten Anlage in dem ersten Prozessabschnitt des Produktionsprozesses auf Basis des ersten Steuergrößenprofils hergestellt, welches insbesondere die Parameterwerte x₁, y₁, p₁, und d₁ umfasst.

Bereits währenddessen werden in einem Schritt S20 automatisiert von der Steuerung 70 ein Wechsel von der ersten zu der zweiten Papiersorte sowie in einer optionalen Ausführung zusätzlich ein Wechsel der ersten zu der in dem Zwischen-Prozessabschnitt hergestellten dritten Papiersorte geplant, wobei in einer Ausführung der bereits geplante Wechsel auf Basis von von der Maschinen- bzw. Anlagensteuerung und -überwachung 72 bereitgestellten Daten dynamisch angepasst werden kann, exemplarisch der Sortenwechselzeitpunkt t_{E1} automatisiert umgeplant, insbesondere zeitlich nach hinten verschoben, werden kann, wenn beispielsweise aufgrund einer Störung die hergestellte Menge der ersten Papiersorte langsamer zunimmt als zunächst bzw. bisher prognostiziert.

**In** einem Schritt S30 wird (gegebenenfalls) der optionale Wechsel zu der dritten Papiersorte durchgeführt und diese in dem Zwischen-Prozessabschnitt hergestellt (Schritt S40).

Bereits teilweise zuvor und währenddessen wird in einem Schritt S50 der Wechsel zu der zweiten Papiersorte durchgeführt und diese in dem zweiten Prozessabschnitt hergestellt (Schritt S60).

Die Planung kann von bzw. auf dem Computersystem 70 durchgeführt werden, was vorzugsweise die Produktionsplanung 71 und/oder die Maschinen- bzw. Anlagensteuerung und -überwachung 72 aufweisen oder mit dieser/diesen kommunizieren kann. Entsprechend kann das Computersystem 70 auch separat von der (Steuerung und/oder Überwachung 72 der) Anlage zur Herstellung der verschiedenen Papiersorten ausgebildet sein.

Wie bereits erwähnt, illustriert das vereinfachte Ausführungsbeispiel exemplarisch insbesondere einen ersten Übergang von einem Wert (beispielsweise x₁) eines ersten Parameters (beispielsweise Q₁₁) zu einem anderen Wert (beispielsweise x₂) dieses ersten Parameters und einen weiteren Übergang von einem Wert (beispielsweise d₁) eines weiteren Parameters (beispielsweise D₅₁) zu einem anderen Wert (beispielsweise d₂) dieses weiteren Parameters bzw. einen entsprechenden Übergang von einem ersten Steuergrößenprofil mit diesen Parameter(werte)n zu dem zweiten Steuergrößenprofil mit diesen anderen Parameterwerten.

**In** der vorliegenden Offenbarung impliziert "weist ein X auf" allgemein keine abschließende Aufzählung, sondern ist eine Kurzform von "weist wenigstens ein X auf" und umfasst auch "weist zwei oder mehr X auf" sowie "weist außer X auch Y auf". Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 11: Stapelturm
- 12: Stapelturm
- 20: Mischbütte
- 21: Maschinenbütte
- 30: Konstantteil
- 31: Stoffauflauf
- 32: Siebpartie
- 40: Pressenpartie
- 41: Pressnip
- 50: Trockenpartie
- 51: Trockenzylinderpaar
- 60: Glättwerk
- 70: Steuerung
- 71: Produktionsplanung
- 72: Maschinen- bzw. Anlagensteuerung und -überwachung

- V₁: produzierte Menge der ersten Papiersorte
- V₁ₛ: vorgegebene Soll-Papiermenge
- Q₁₁: Stoffmenge einer ersten Faserkomponente
- x₁, x₂: Wert von Q₁₁
- Q₁₂: Stoffmenge einer zweiten Faserkomponente
- y₁, y₂: Wert von Q₁₂
- B₃₁: im Stoffauflauf 31 vorliegende Faserstoffsuspensionsart
- b₁, b₂: Wert von B₃₁
- P₄₁: Linienlast
- p₁, p₂: Wert von P₄₁
- D₅₁: Heizdampfstrom
- d₁, d₂: Wert von D₅₁
- T₅₁: Trockenzylinderpaartemperatur
- ϑ₁, ϑ₂: Wert von T₅₁
- Δ1: erster Prozessabschnitt
- Δ2: zweiter Prozessabschnitt
- Δ3: Zwischen-Prozessabschnitt
- t_{A2}: Beginn zweiter Prozessabschnitt
- t_{D}: anderer Startzeitpunkt
- t_{E1}: Sortenwechselzeitpunkt
- tₐ: aktueller Planungszeitpunkt
- t_{P}; t'_{P}: Zeitpunkt Erhöhung Linienlast
- t_{Q}: erster Startzeitpunkt

## Patentansprüche

1. Verfahren zum Planen eines Wechsels
- von einer mithilfe einer Anlage (11-72) in einem ersten Prozessabschnitt (Δ1) eines Produktionsprozesses auf Basis eines ersten Steuergrößenprofils hergestellten ersten Papiersorte
- zu einer danach mithilfe der Anlage in einem zweiten Prozessabschnitt (Δ2) des Produktionsprozesses auf Basis eines zweiten Steuergrößenprofils hergestellten zweiten Papiersorte
in dem Produktionsprozess, wobei das erste Steuergrößenprofil
- einen Wert eines ersten Parameters und
- einen Wert wenigstens eines weiteren Parameters
aufweist, das zweite Steuergrößenprofil
- einen anderen Wert des ersten Parameters und
- einen anderen Wert des weiteren Parameters
aufweist und ein Übergang von dem ersten Steuergrößenprofil zu dem zweiten Steuergrößenprofil
- einen ersten Übergang von dem einen Wert des ersten Parameters zu dem anderen Wert des ersten Parameters und
- einen weiteren Übergang von dem einen Wert des weiteren Parameters zu dem anderen Wert des weiteren Parameters
umfasst;
wobei der Übergang von dem ersten Steuergrößenprofil zu dem zweiten Steuergrößenprofil automatisiert auf Basis einer Herstellung der ersten Papiersorte geplant wird (S20).

2. Verfahren nach Anspruch 1, **dadurch gekennzeichnet, dass** eine Sortenwechselzeit automatisiert auf Basis einer in dem ersten Prozessabschnitt hergestellten Papiermenge (V₁) der ersten Papiersorte und/oder einer vorgegebenen Soll-Papiermenge (V₁ₛ) der ersten Papiersorte geplant wird.

3. Verfahren nach einem der vorhergehenden Ansprüche, **dadurch gekennzeichnet, dass** der Übergang von dem ersten Steuergrößenprofil zu dem zweiten Steuergrößenprofil automatisiert auf Basis wenigstens eines bereits durchgeführten früheren Wechsels von der mithilfe der Anlage hergestellten ersten Papiersorte und/oder zu der mithilfe der Anlage hergestellten zweiten Papiersorte geplant wird.

4. Verfahren nach einem der vorhergehenden Ansprüche, **dadurch gekennzeichnet, dass** für den ersten Übergang ein erster Startzeitpunkt (t_{Q}) geplant wird und für den weiteren Übergang ein anderer, späterer Startzeitpunkt (t_{D}) geplant wird.

5. Verfahren nach dem vorhergehenden Anspruch, **dadurch gekennzeichnet, dass** der erste Startzeitpunkt innerhalb des ersten Prozessabschnitts liegt und/oder wenigstens ein für einen weiteren Übergang geplanter anderer Startzeitpunkt (t'_{P}) innerhalb des ersten Prozessabschnitts liegt und/oder wenigstens ein für einen weiteren Übergang geplanter anderer Startzeitpunkt (t_{P}; t_{D}) außerhalb des ersten Prozessabschnitts liegt und/oder dass ein variabler zeitlicher Abstand zwischen dem ersten und anderen Startzeitpunkt dynamisch geplant wird.

6. Verfahren nach einem der vorhergehenden Ansprüche, **dadurch gekennzeichnet, dass** der Übergang von dem ersten Steuergrößenprofil zu dem zweiten Steuergrößenprofil automatisiert auf Basis einer bei einer Herstellung der ersten Papiersorte durchgeführten Steuerung und/oder Überwachung der Anlage geplant wird.

7. Verfahren nach dem vorhergehenden Anspruch, **dadurch gekennzeichnet, dass** ein geplanter Übergang von dem ersten Steuergrößenprofil zu dem zweiten Steuergrößenprofil automatisiert auf Basis einer bei einer Herstellung der ersten Papiersorte durchgeführten Steuerung und/oder Überwachung der Anlage verändert wird.

8. Verfahren nach einem der vorhergehenden Ansprüche, **dadurch gekennzeichnet, dass** zusätzlich automatisiert ein Wechsel von der mithilfe der Anlage in dem ersten Prozess auf Basis des ersten Steuergrößenprofils hergestellten ersten Papiersorte zu einer mithilfe der Anlage in einem Zwischen-Prozessabschnitt (Δ3) des Produktionsprozesses zwischen dem ersten und zweiten Prozessabschnitt auf Basis eines dritten Steuergrößenprofils hergestellten dritten Papiersorte geplant wird;
wobei ein Übergang von dem ersten Steuergrößenprofil zu dem dritten Steuergrößenprofil automatisiert auf Basis einer Herstellung der ersten Papiersorte geplant wird und einen Übergang von dem ersten Steuergrößenprofil zu dem dritten Steuergrößenprofil während des Übergangs von dem ersten Steuergrößenprofil zu dem zweiten Steuergrößenprofil umfasst.

9. Verfahren nach dem vorhergehenden Anspruch, **dadurch gekennzeichnet, dass**
- ein Parameter des ersten und zweiten Steuergrößenprofils eine Steuergröße eines Anlagenabschnitts (11, 12, 20, 21) zum Bereitstellen von Fasersuspensionen und/oder
- ein Parameter des ersten und zweiten Steuergrößenprofils eine Steuergröße eines Konstantteils (30) und/oder
- ein Parameter des ersten und zweiten Steuergrößenprofils eine Steuergröße eines Stoffauflaufs (31) und/oder
- ein Parameter des ersten und zweiten eine Steuergröße einer Siebpartie (32) und/oder
- ein Parameter des ersten und zweiten eine Steuergröße einer Pressenpartie (40) und/oder
- ein Parameter des ersten und zweiten eine Steuergröße einer Trockenpartie (50) und/oder
- ein Parameter des ersten und zweiten eine Steuergröße eines Glättwerks (60)
aufweist.

10. Verfahren zur Durchführung eines Produktionsprozesses zur Herstellung von verschiedenen Papiersorten mithilfe einer Anlage, wobei
- eine ersten Papiersorte mithilfe der Anlage in einem ersten Prozessabschnitt des Produktionsprozesses auf Basis eines ersten Steuergrößenprofils hergestellt wird (S10);
- ein Wechsel von der Herstellung der ersten Papiersorte zu einer Herstellung einer anderen zweiten Papiersorte nach einem Verfahren nach einem der vorhergehenden Ansprüche geplant wird (S20);
- dieser geplante Wechsel durchgeführt wird (S50); und
- mithilfe der Anlage in einem zweiten Prozessabschnitt des Produktionsprozesses auf Basis eines zweiten Steuergrößenprofils die zweite Papiersorte hergestellt wird (S60).

11. System zum Planen eines Wechsels
- von einer mithilfe einer Anlage in einem ersten Prozessabschnitt eines Produktionsprozesses auf Basis eines ersten Steuergrößenprofils hergestellten ersten Papiersorte
- zu einer danach mithilfe der Anlage in einem zweiten Prozessabschnitt des Produktionsprozesses auf Basis eines zweiten Steuergrößenprofils hergestellten zweiten Papiersorte;
in dem Produktionsprozess, wobei das erste Steuergrößenprofil
- einen Wert eines ersten Parameters und
- einen Wert wenigstens eines weiteren Parameters
aufweist, das zweite Steuergrößenprofil
- einen anderen Wert des ersten Parameters und
- einen anderen Wert des weiteren Parameters
aufweist und ein Übergang von dem ersten Steuergrößenprofil zu dem zweiten Steuergrößenprofil
- einen ersten Übergang von dem einen Wert des ersten Parameters zu dem anderen Wert des ersten Parameters und
- einen weiteren Übergang von dem einen Wert des weiteren Parameters zu dem anderen Wert des weiteren Parameters
umfasst;
wobei das System zur Durchführung eines Verfahrens nach einem der vorhergehenden Ansprüche eingerichtet ist und/oder Mittel zum automatisieren Planen des Übergangs von dem ersten Steuergrößenprofil zu dem zweiten Steuergrößenprofil auf Basis einer Herstellung der ersten Papiersorte aufweist.

12. Computerprogramm oder Computerprogrammprodukt, wobei das Computerprogramm oder Computerprogrammprodukt, insbesondere auf einem computerlesbaren und/oder nicht-flüchtigen Speichermedium gespeicherte, Anweisungen enthält, die bei der Ausführung durch einen oder mehrere Computer oder ein System nach Anspruch 11 den oder die Computer oder das System dazu veranlassen, ein Verfahren nach einem der Ansprüche 1 bis 10 durchzuführen.
